# EUROPEAN PATENT APPLICATION

(11) **EP 4 554 147 A1**
(43) Date of publication of application: **14.05.2025**
(21) Application number: 24210561.7
(22) Date of filing: 04.11.2024
(51) Int. Cl.: H04L 9/40, H04L 9/00, H04L 9/08, H04N 7/18, G08B 1/00, G06V 20/52, G08B 13/196, H04L 9/14

(54) **SELECTIVE SHARING OF ENCRYPTED DATA IN AN ELECTRONIC MONITORING SYSTEM**

(30) Priority: 10.11.2023 US 202318506675
(71) Applicant: Arlo Technologies, Inc., Carlsbad, CA 92008 (US)
(72) Inventor: Singh, Rajinder, San Jose, CA, 95135 (US)
(74) Representative: Grünecker Patent- und Rechtsanwälte PartG mbB

(57) **Abstract**

An electronic monitoring system and a method of monitoring an activity zone are provided. The electronic monitoring system includes a monitor configured to generate a data packet corresponding to the activity. An encryption processor is in communication with the monitor and is configured to encrypt the data packet using a public key. A cloud-based control system configured to receive and store the encrypted data packet. A first user device is associated with the monitor and is communicable with the cloud-based control system. The first user device includes an input allowing a user to transmit a request to the cloud based control system to provide a time-bound decryption key capable of decrypting the encrypted data packet during a selected time period to a second user device.

## Description

### FIELD OF THE INVENTION

The present invention relates generally to networked electronic monitoring systems, and in particular, to an electronic monitoring system and method of selectively sharing encrypted data transmitted in an electronic monitoring system.

### BACKGROUND AND SUMMARY OF THE INVENTION

Modern electronic monitoring systems for the homes and other areas include various components including video and audio communication technology. For example, the typical electronic monitoring system includes imaging devices or cameras directed at various activity zones to be monitored for the simultaneous video and audio communication to a user on a computing device; one or more sensors configured to detect one or more types of conditions or stimulus, for example, motion, opening or closing events of doors or windows, the presence of smoke, carbon monoxide, water leaks, and temperature changes; and/or one or more audio devices such as microphones, sound sensors, and speakers configured for audio communication or providing audible alerts. Upon detection of an activity, such as sound or motion, in an activity zone, or upon determining that a captured image of an activity zone matching a predetermined image, the electronic monitoring system triggers an alert which is transmitted to a user device over a communications network to notify the user of the detected activity. The user device typically is a smart phone, a tablet, or a personal computer.

It can be appreciated that many of components of the electronic monitoring system must have considerable processing capability for performing processing operations ranging from simple filtering operations to more complex operations such as facial recognition or other classification operations. When performed by a component of the electronic monitoring system, these processing operations are sometimes referred to as "edge processing" operations because they are permed by "edge devices" of a system rather than by a central processor such as a cloud-based processor. The electronic monitoring system typically further includes a hub or base station to communicate with the various components of the system and with an external server, such as a cloud-based server. In addition, the hub or base station may also communicate with one or more user devices. The hub or base station may be a dedicated device, or may be integrated into another device such as a gateway router.

It can be understood that the imaging devices, security cameras, sensors, microprocessors, and communication systems of the electronic monitoring system must all work together to insure the proper functioning of the system. Data must be digitized, recorded, relayed, processed, analyzed, and shared among the various components of the system. Hence, trustworthy communication of data between the various components of the electronic monitoring system is essential for the proper operation of the system. Further, maintaining the security and integrity of these communications is required to protect the data and the various systems and components from digital attacks.

While electronic monitoring systems are dependent upon the security and integrity of the data flowing between the various components thereof, the data can be vulnerable to weakness and exploitation. More specifically, the data may be subjected to a random and accidental occurrence or may be subjected to a targeted and deliberate attack. For example, targeted attacks on the cloud based server, the Internet of Things (IoT), and/or the various components of the electronic monitoring system may occur. The potential for harm to the data, and hence the electronic monitoring system itself, can vary significantly depending on the occurrence or attack.

Further, it is often necessary or desirable for a user to provide a third party, such as a friend or a family member, with access to the electric monitoring system. Currently, if the user wishes to have others to have access to the sounds, images, captured frames, and/or video clips captured by client devices and monitoring devices of the electronic monitoring system associated with a user's account, a user must either provide the third party with access either to their account or link the client devices and the monitoring devices of the electronic monitoring system associated with a user's account to the third party's account and securely transmit a private key onto a service provider's application downloaded on the third party's user device. It can be appreciated that allowing a third party access to a user's account or providing a third party with unlimited access to a user's client devices and monitoring devices of the electronic monitoring system through the third party's account can compromise the security and integrity of the electronic monitoring system.

Therefore, it is a primary object and feature of the present invention to provide an electronic monitoring system and method of selectively sharing encrypted data transmitted in an electronic monitoring system.

It is a further object and feature of the present invention to provide an electronic monitoring system and method of selectively sharing encrypted data transmitted in an electronic monitoring system that limits a third party to access the encrypted data to selected time periods and under user selected conditions.

It is a further object and feature of the present invention to provide an electronic monitoring system and method of selectively sharing encrypted data transmitted in an electronic monitoring system which is simple and inexpensive to implement.

### SUMMARY OF THE INVENTION

In accordance with the present invention, an electronic monitoring system is provided. The electronic monitoring system includes a monitor for monitoring an activity within an activity zone. The monitor is configured to generate a data packet corresponding to the activity. An encryption processor is in communication with the monitor and is configured to encrypt the data packet in accordance with a user selected rule using a first public key. A cloud-based control system is configured to receive and store the data packet encrypted with the first public key. A first user device is associated with the monitor and is communicable with the cloud-based control system. The first user device includes an input allowing a user to transmit a request to the cloud-based control system to provide a time-bound decryption key capable of decrypting the encrypted data packet during a selected time period to a second user device.

The encryption processor may be configured to encrypt the data packet using a second public key. In some configurations, the first user device may be adapted to receive the data packet encrypted with the second public key. The user device may include a private key and a decryption processor configured to decrypt the encrypted data packet using the second private key. The second user device may be communicable with the cloud-based control system and may be adapted to receive the data packet encrypted with the first public key and the time-bound decryption key therefrom. The second user device may include a decryption processor configured to decrypt the data packet encrypted with the first public key using the time-bound decryption key during the selected time period.

The monitor may be a detector for detecting the activity in the activity zone. The detector may generate the data packet in response to detection of the activity in the activity zone and is configured to generate an alert signal in response to the activity detected within the activity zone. The cloud-based control system may be configured to receive the alert signal. In some implementations, when the alert signal is received during the selected time period, the cloud-based control system may transmit an alert to the second user device.

The detector may include an imaging device having a field of view in the activity zone and is configured to capture an image of the field of view in response to the activity detected. The image may include a plurality of frames defining the data packet. The data packet may be a first data packet and each frame of the plurality of frames of the image may define a corresponding data packet so as to define a plurality of data packets.

Alternatively, the plurality of the frames may define an event video and the encryption processor may be configured to encrypt the event video using the first public key.

In accordance with a further aspect of the present invention, an electronic monitoring system is provided. The electronic monitoring system may include a monitor for monitoring an activity within an activity zone and a cloud-based control system. The monitor may be configured to generate a data packet corresponding to the activity. A hub may be communicable with the monitor and the cloud-based control system. The hub may be configured to receive the data packet from the monitor and to transmit the data packet to the cloud-based control system. An encryption processor may be provided and, if provided, may be configured to encrypt the data packet using a first public key and to encrypt the data packet using a second public key. A computer-readable memory may be associated with the cloud-based control system. The computer-readable memory may be configured to store the data packet encrypted with the first public key and the data packet encrypted with the second public key. First and second user devices are also provided. The first user device may be associated with the monitor and may be communicable with the cloud-based control system. The first user device may be adapted to receive the data packet encrypted with the second public key and may include an input allowing a user to transmit a request to the cloud-based control system to provide a time-bound decryption key capable of decrypting the data packet encrypted with the first public key during a selected time period to a second user device. The first device also may include a private key and a decryption processor configured to decrypt the data packet encrypted with the second public key using the private key. The second user device may be communicable with the cloud-based control system and may be adapted to receive the data packet encrypted with the first public key and the time-bound decryption key therefrom. The second user device may include a decryption processor configured to decrypt the data packet encrypted with the first public key using the time-bound decryption key during the selected time period.

The monitor may be a detector for detecting the activity in the activity zone. The detector may generate the data packet in response to detection of the activity in the activity zone and is configured to generate an alert signal in response to the activity detected within the activity zone. The cloud-based control system may be configured to receive the alert signal. When the alert signal is received during the time period, the cloud-based control system may transmit an alert to the second user device.

The detector may include an imaging device having a field of view in the activity zone and is configured to capture an image of the field of view in response to the activity detected. The image may be comprised of a plurality of frames defining the data packet.

The data packet may be a first data packet and each frame of the plurality of frames of the image may define a corresponding data packet so as to define a plurality of data packets. Alternatively, the plurality of the frames may define an event video. The encryption processor may be configured to encrypt the event video using the first public key.

In accordance with a still further aspect of the present invention, a method of monitoring an activity zone is provided. The method includes the step of transmitting a request to a control system to provide a time-bound decryption key capable of decrypting a data packet encrypted with a first public key during a selected time period to a selected user device. An activity zone is monitored for an activity and the data packet corresponding to the activity is generated. The data packet is transmitted to a control system and the data packet is stored in computer-readable memory associated with the control system. The data packet is encrypted utilizing the first public key prior to storage in computer-readable memory. The data packet encrypted with the first public key and the time-bound decryption key may be transmitted to the selected user device. The selected user device includes a decryption processor configured to decrypt the data packet encrypted with the first public key using the time-bound decryption key during the selected time period. The method may also include the additional step of decrypting the data packet encrypted with the public key on the selected user device using the time-bound decryption key during the selected time period.

The activity may be monitored by a monitoring device, and the request may be transmitted by a system user device previously associated with the monitoring device. The data packet may be also encrypted using a second public key. The system user device is adapted to receive the data packet encrypted by the second public key. The system user device may include a private key and a decryption processor configured to decrypt the data packet encrypted with the second public key using the private key.

The data packet maybe generated in response to detection of the activity in the activity zone. An alert signal may be generated in response to detection of the activity within the activity zone and transmitted to the control system. When the alert signal is received by the control system during the selected time period, the control system may transmit an alert to the selected user device.

### BRIEF DESCRIPTION OF THE DRAWINGS

Preferred exemplary embodiments of the invention are illustrated in the accompanying drawings in which like reference numerals represent like parts throughout, and in which:
FIG. 1 is a schematic representation of an electronic monitoring system constructed in accordance with the invention;
FIG. 2 schematically illustrates the internal circuitry of one the monitoring devices of the system of FIG. 1;
FIG. 3 schematically illustrates the internal circuitry of one of the user devices of the system of FIG. 1;
FIGS. 4A-4E collectively form a first flowchart showing the methodology in accordance with the present invention; and
FIGS 5A-5E collectively form a second flowchart showing methodology in accordance with the present invention

### DETAILED DESCRIPTION

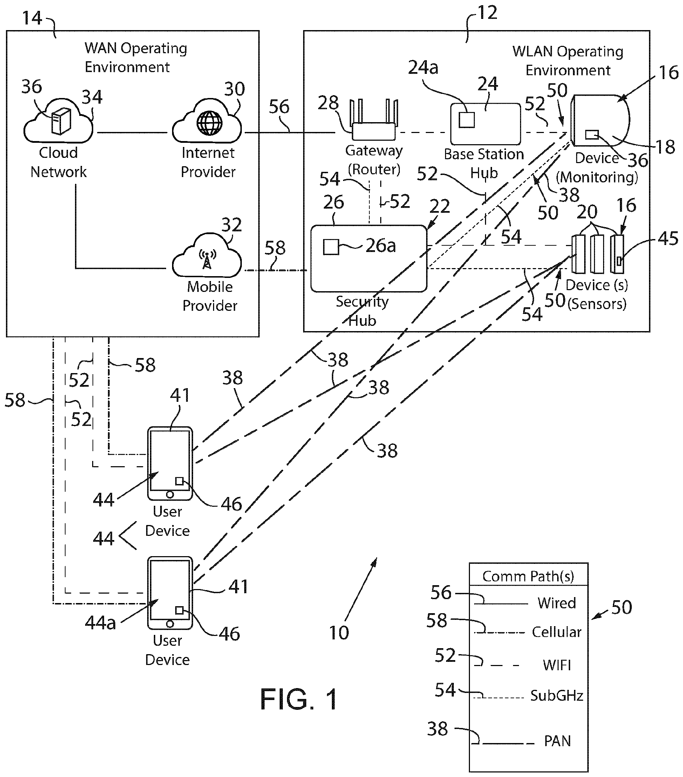

Referring to FIG. 1, an electronic monitoring system 10 constructed in accordance with an aspect of the present invention is generally designated by the reference numeral 10. Electronic monitoring system 10 is implemented in a wireless communication operating environment. For example, wireless communication may be implemented by a WLAN (wireless local area network) operating environment (WLAN 12) or by direct Bluetooth^{®} or any communications technology on a personal area network (PAN) between the various components of electronic monitoring system 10 and/or one or more user devices 44, as hereinafter described.

In the depicted embodiment, WLAN 12 is communicatively connected to a WAN (wide area network) operating environment, designated by the reference numeral 14. Within WLAN 12, various monitors, or client devices 16, such as monitoring devices 18 and sensors 20, are wirelessly networked to a base station or high frequency hub 24 which, in turn, communicates with the WAN 14 via a gateway hub, shown as gateway router 28. Base station hub 24 includes a processor 24a for providing internal computing capabilities, as hereinafter described. Base station hub 24 and router 28 provide a high frequency connection to WAN 14. Base station hub 24 may be eliminated as a stand-alone module if its functionality is incorporated into gateway router 28, in which case gateway router 28 also serves as a base station hub. The system may also include a security hub 26 that communicates with monitoring device(s) 18 and with the WAN 14 and provides a low frequency connection between the WAN 14 and monitoring devices 18. If present, security hub 26 may also communicate with the router or hub 28, such as through a high frequency connection path 52 and/or a low frequency connection 54 path to the router 28. The security hub 26 is also provided with a processor 26a for providing internal computing capabilities, as hereinafter described, and has the capability of providing a high frequency connection with monitoring devices 18. A public key for encrypting data transmitted by base station hub 24 and/or security hub 26 may be saved thereon, for reasons hereinafter described. As is known, a public key is a cryptographic key comprising a mathematical algorithm implemented in software (or hardware) that may be used to encrypt data. The public key is a string of bits that are combined with the data using an encryption algorithm to create ciphertext, which is unreadable. In order to decrypt the encrypted data, a private key must be used. As is known, a private key is a cryptographic key comprising a mathematical algorithm implemented in software (or hardware) that may be used to decrypt data encrypted utilizing a public key. The private key decrypts the encrypted data back to plaintext, which is readable. The private key is saved in a memory in one or more of the user devices 44 as explained in more detail below.

Still referring to FIG. 1, gateway router 28 is typically implemented as a WIFI hub that communicatively connects WLAN 12 to WAN 14 through an internet provider 30. Internet provider 30 includes hardware or system components or features such as last-mile connection(s), cloud interconnections, DSL (digital subscriber line), cable, and/or fiber-optics. As mentioned, the functionality of the base station hub 24 also could be incorporated into router 28, in which case router 28 becomes the base station hub, as well as the router. Another connection between WLAN 12 and WAN 14 may be provided between security hub 26 and mobile provider 32. Mobile provider 32 includes hardware or system components or features to implement various cellular communications protocols such as 3G, 4G, LTE (long term evolution), 5G, or other cellular standard(s). Besides the mobile connection, security hub 26 typically also is configured to connect to WAN 14 by way of its connection to router hub 28 and the router hub's connection to WAN 14 through internet provider 30. Each of the internet provider 30 and mobile provider 32 allows the components of system 10 to interact with a backend system or control services that can control functions or provide various processing tasks of components of system 10, shown as a cloud-based backend control service system 34, which could be an Arlo SmartCloud^{™} system. The backend system, such as the cloud-based control service system 34, includes at least one server 36 and typically provides, for example, cloud storage of events, AI (artificial intelligence) based processing such as computer vision, and system access to emergency services. The public key also may be saved in computer-readable memory associated with cloud-based control service system 34, for reasons hereinafter described.

As noted above, electronic monitoring system 10 typically includes multiple monitoring devices 18 that are mounted to face toward respective areas being monitored, such as around a building or other structure or area. It is intended for monitoring devices 18 to perform a variety of monitoring, sensing, and communicating functions. Each monitoring device 18 includes a firmware image stored in non-volatile memory thereon. As is conventional, the firmware image acts as the monitoring device's complete operating system, performing all control, monitoring, and data manipulation functions. In addition, the public key may also be saved in computer-readable memory associated with each monitoring device 18, for reasons hereinafter described.

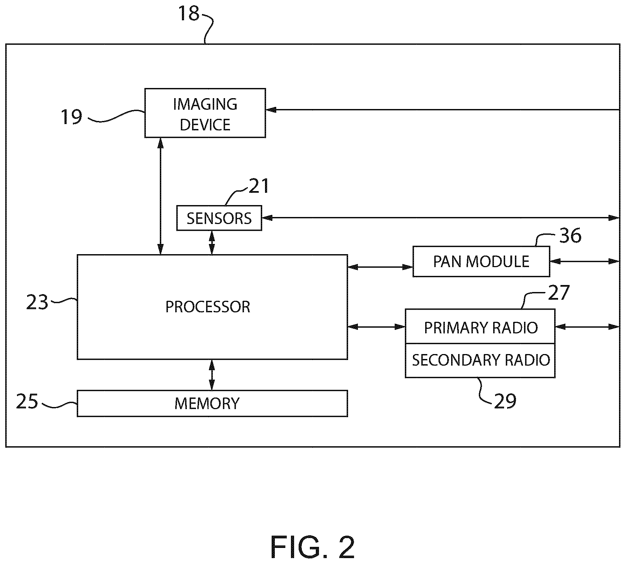

Referring to FIG. 2, by way of example, one such monitoring device 18 may include an imaging device 19, such as a smart camera, that is configured to capture, store, and transmit visual images and/or audio of the monitored area within the environment, e.g., an Arlo^{®} camera available from Arlo Technologies, Inc. of Carlsbad, California. In addition to containing a security camera, the monitoring device 18 may also include a one or more sensors configured to detect one or more types of conditions or stimulus, for example, motion, opening or closing events of doors or windows, the presence of smoke, carbon monoxide, water leaks, and temperature changes. Instead of or in addition to containing sensors, monitoring device 18 may have audio device(s) such as microphones, sound sensors, and speakers configured for audio communication or providing audible alerts. Other types of monitoring devices 18 may have some combination of sensors 20 and/or audio devices without having imaging capability. One such device is Arlo Chime^{™}, which has only audio capabilities. Sensors 20 or other monitoring devices 18 also may be incorporated into form factors of other house or building accessories, such as doorbells, floodlights, etc.

Each monitoring device 18 includes circuitry, a main processor 23 and/or an image signal processor, and computer-readable memory 25 associated therewith. It is further contemplated to store the public key in computer-readable memory associated with each monitoring device 18, for reasons hereinafter described. The circuitry, the main processor 23, the computer-readable memory 25 and the public key are configured to allow the monitoring device to perform a variety of tasks including, but not limited to, capturing a video image with the smart camera and the metadata associated with the image (e.g. the time and date that image was captured); encrypting each frame of video image using the public key; processing the captured video image to generate an enhanced video image from the encrypted frames of the video image; controlling the acquisition and transmission of data; and transmitting an enhanced media stream to a respective hub 24 and/or 26 for further processing and/or further transmission to a server, such as the server 36 of the cloud-based control service system 34, and/or communication with user device(s) 44. It can be appreciated that the main processor 23 and/or the image signal processor may perform additional tasks without deviating from the scope of the present invention. For example, the image signal processor can toggle between: 1) a low power mode in which the image signal processor performs only essential tasks to insure proper operation of the smart camera, thereby minimizing the electrical power drawn from a battery used to power a corresponding monitoring device 18; and 2) an operation mode, in which the image signal processor is awake and capable of performing all programmed tasks.

Monitoring devices 18 of system 10 may also include various other device(s) and/or systems that perform functions other than monitory. Such devices include smart home devices such as HVAC control systems and components. They also could include one-touch type communication devices such as panic buttons and other communication buttons. One such button is marketed under Arlo Technologies, Inc. under the brand name ARLO SAFE^{™}. All of these devices and systems can be considered "monitoring devices" for purposes of the present discussion. Devices that communicate using LE protocols such as Bluetooth^{®} can be considered "LE devices". Devices that communicate with Bluetooth^{®} Low Energy, are considered "BLE devices", including the "BLE Button".

In order to allow for low and high frequency communication on WLAN 12, it is contemplated for monitoring devices 18 to have two radios operating at different frequencies. Referring again to FIG. 2, a first, "primary" radio 27 operates at a first frequency, typically at a relatively high frequency, typically of 2.4 GHz to 5 GHZ, during period of normal conductivity to perform monitoring and data capture functions such as video capture and transmission, sound transmission, motion sensing, etc. The second or "secondary radio" 29 operates at a second frequency that is immune or at least resistant to resistance from signals that typically jam signals over the first frequency. The second frequency may be of considerably lower frequency in the sub-GHz or even RF range and may have a longer range than the primary radio. It is intended for the secondary radio to be operable, when communications over the primary communication path are disrupted, in order to permit the continued operation of monitoring devices 18, as well as, to permit transmit and display information regarding the communications disruption to be transmitted and displayed for a user. The term "disruption," as used herein, applies equally to an initial failure to connect over the primary communication path upon device startup and a cessation or break in connection after an initial successful connection. In addition, it is contemplated for each monitoring device 18 to include Bluetooth^{®} or any PAN communications module 36 designated for wireless communication. As is known, modules 36 allows monitoring devices 18 to communicate directly with one or more user devices 44 over a wireless Personal Area Network (PAN) 38. Likewise, sensors 20 may include Bluetooth^{®} or any PAN communications module 45 to allow sensor 20 to communicate directly with one or more user devices 44 over a wireless Personal Area Network (PAN) 38, FIG. 1.

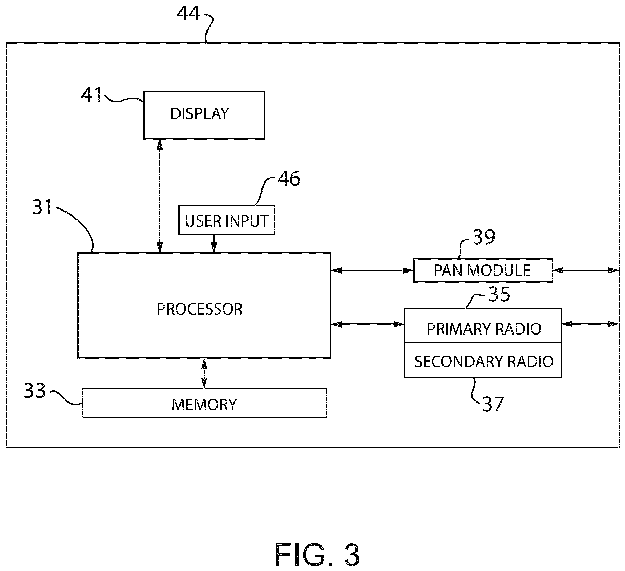

Referring to FIGS. 1 and 3, one or more user devices 44, such as a smart phone, tablet, laptop, or PC, may communicate with various components of electronic monitoring system 10. It can be understood that user devices 44 may communicate with the various components of electronic monitoring system 10 utilizing WLAN 12, WAN 14 and/or PAN 38 via primary radio 35, secondary radio 37 and PAN communications module 39, respectively, to provide an interface through which a user may interact with electronic monitoring system 10, including client devices 16. Each user device 44 includes a display system that typically includes both an audio display and a video display such as a touchscreen. Referring to FIG. 3, each user device 44 also has a processor 31 to allow for internal computing capabilities, computer-readable memory 33 and a program or application, such as the Arlo Smart application, serving as the user interface with the remainder of system 10, thereby allowing a user to transmit various commands and information to the components of system 10, as hereinafter described. Each user device 44 includes at least one actuatable user input 46, such as all or a portion of a touch screen 41 as shown Figs. 1 and 3, a keypad, and/or a microphone. In response to the information provided on the display of the one or more user devices 44, a user may actuate the at least one actuatable user input 46 to address the information. A private key, used to decrypt data encrypted utilizing the public key and received by user device 44, is stored in the computer-readable memory associated with user device 44, for reasons hereinafter described.

Referring back to FIG. 1, within WLAN 12, multiple communication paths 50 are defined that transmit data between the various components of system 10. Communication paths 50 include a default or primary communication path 52 providing communication between monitoring device 18 and the base station hub 26, and a fail-over or fallback secondary communication path 54 providing communication between monitoring device 18 and the security hub 26. Optionally, some of the monitoring devices 18 that do not require high bandwidth to operate may only communicate through the secondary communication path 54, such as sensors 20 shown in FIG. 1. Thus, even during a failure of the primary communication path 52, sensors 20 will continue to operate normally. A collective area in which device communication can occur through the primary communication path 52 defines a primary coverage zone. A second, typically extended, collective area in which the device communication can occur through the secondary communication path 54 defines a secondary coverage zone. A wired communication path 56 is shown between the router 28 and the internet provider 30, and a cellular communication path 58 is shown between security hub 26 and mobile provider 32. WAN 14 typically includes various wireless connections between or within the various systems or components, even though only wired connections 56 are shown. If the security hub 26 and the associated secondary communication path 54 are not present, the sensors 20 may communicate directly with the base station hub 24 (if present, or the router 28 if the functionality of the base station hub is incorporated into the router) via the primary communication path 52.

As described, electronic monitoring system 10 is configured to implement a seamless OTA communication environment for each client device 16 by implementing a communication path switching strategy as a function of the operational state of primary and/or secondary communication paths, as heretofore described. For example, each monitoring device 18 is configured to acquire data and to transmit it to a respective hub 24 and/or 26 for further processing and/or further transmission to a server such as the server 36 of the cloud-based control service system 34 and/or the user device(s) 44. The server 36 or other computing components of system 10 or otherwise in the WLAN 12 or WAN 14 can include or be coupled to a microprocessor, a microcontroller or other programmable logic element (individually and collectively considered "a controller") configured to execute a program. The controller also may be contained in whole in the monitoring device 18, base station hub 24, security hub 26, and/or the WIFI hub or router 28. Alternatively, interconnected aspects of the controller and the programs executed by it could be distributed in various permutations within the monitoring device 18, the hubs 24 and 26, router 28, and the server 36. This program may be utilized in filtering, processing, categorizing, storing, recalling, and transmitting data received from the monitoring device 18 via the hubs 24 and 26, router 28, and server 36. Server 36 or other appropriate system device may also be in communication with or include a computer vision program ("CV"), which can apply one or more filters or processes, such as edge detection, facial recognition, motion detection, etc., to detected one or more characteristics of the recording such as, but not limited to, identifying an individual, animal, vehicle, or package present in the recording.

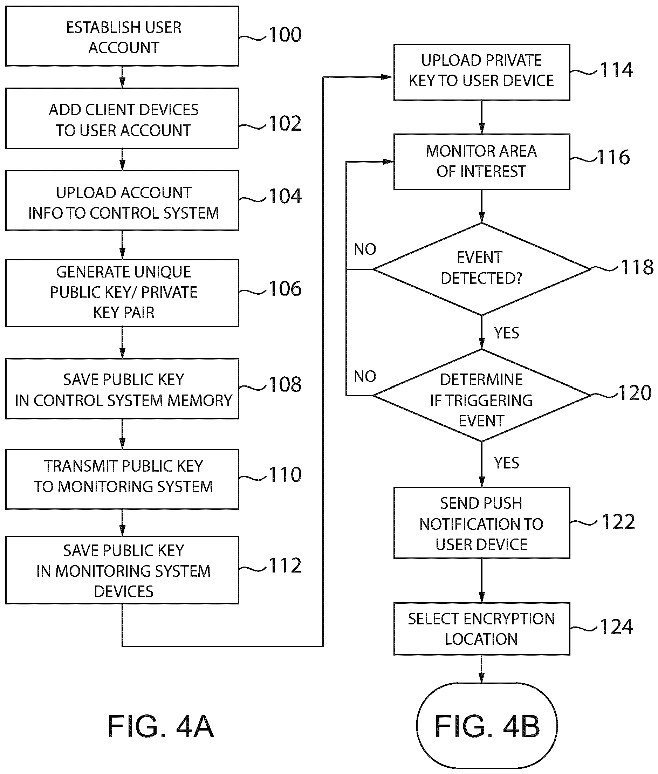

Referring to Fig. 4A, in order to set up the electronic monitoring system 10 of the present embodiment, a user establishes an account with a service provider, e.g. Arlo, through the service provider's webpage or using the service provider's application on user device 44, block 100. In the account, a user may add or onboard various client devices 16, such as monitoring devices 18 and sensors 20, to the electronic monitoring system 10 associated with the user's account. Onboarding may involve, for example, utilizing a pre-populated list of devices and simply following a series of on-screen instructions, block 102. Once the various client devices 16 are added to the user's electronic monitoring system 10 and the information is uploaded to cloud-based control service system 34, cloud-based control service system 34 generates a unique public key/private key pair for the user's electronic monitoring system 10, block 104. The public key is saved in the computer-readable memory associated with cloud-based backend control service system 34, block 108, and transmitted to base station hub 24 and the various client devices 16, such as monitoring devices 18 and sensors 20, block 110. The public key then is saved in computer-readable memory 25 associated with noted devices, block 112. In addition, the private key is uploaded to the service provider's application on user device 44 and saved therein in the computer-readable memory 33 of user device 44, block 114.

In addition, a user may allow one or more designated third parties to have selective access to the data packets transmitted on electronic monitoring system 10, as hereinafter described. Each of the one or more designated third parties must have a corresponding user device 44a, so as to allow for the designated third party to have access to the data packets, as hereinafter described. By way of example, designated third party user device 44a may be identical in structure to user device 44. As such, the prior description of user device 44 is understood to describe designated third party user device 44a as if fully described herein.

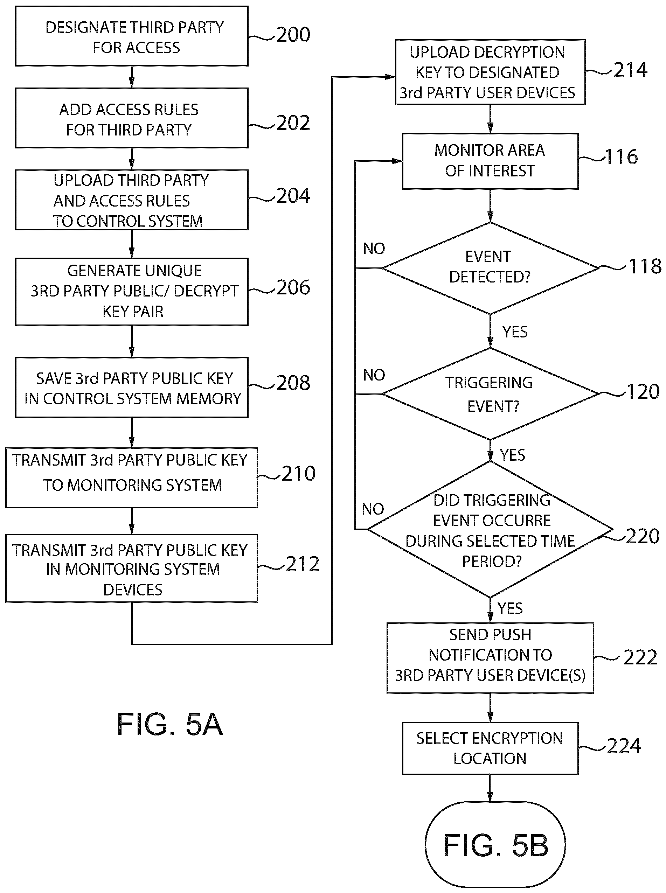

Referring to Fig. 5A, a user may utilize user device 44 to add each designated third party along with various access rules that specify the circumstances under which each designated third party may have access to a corresponding data packet, block 200. More specifically, utilizing user device 44, a user can specify one or more of client devices 16, as well as, the day and/or time when a designated third party may have access to a data packet generated by specified client device 16, block 202. For example, a user may allow a designated third party access to monitoring device 18 between a selected time period, (e.g. between 10am - 12noon daily or between 8am - 5pm on Sundays). Alternatively, a user may allow access to different users at different times periods (e.g., User A may have access between 8am - 3pm daily, while User B may have access between 11am - 12noon on Fridays). In the event the data packet comprises an audio or video file, e.g, a thumbnail or video frames of an image, it is contemplated for a user to have the ability to command that the data packet to be selectively edited prior to encryption. For example, a user may provide instructions to mask and/or remove different portions of the thumbnails or video frames of an image and/or sounds for which the designated third party has access (e.g., a user may provide instructions to mask or blur known faces in any thumbnails or video frames of an image provided to User A, as hereinafter described, while providing instructions to mask or blur unknown faces in any thumbnails or video frames of an image provided to User B). In such matter, it can be appreciated the user associated with system 10 can selectively share encrypted data transmitted in electronic monitoring system 10 with designated third parties only in accordance with user selected access rules.

Once the one or more designated third parties and the corresponding access rules have been selected by the user, the information is uploaded to cloud-based control service system 34, block 204. The cloud-based control service system 34 transmits the access rules to base station hub 24 and the various client devices 16, such as monitoring devices 18 and sensors 20, block. The access rules are then saved in computer-readable memory 25 associated with noted third party user devices 44a, block. In addition, cloud-based control service system 34 generates a unique public key/decryption key pair for each designated third party user, block 206. Each third party public key is saved in the computer-readable memory associated with cloud-based backend control service system 34, block 208, and transmitted to base station hub 24 and the various client devices 16, such as monitoring devices 18 and sensors 20, block 210. Each third party public key then is saved in computer-readable memory 25 associated with noted devices, block 212. In addition, each decryption key and the corresponding access rules selected by the user are uploaded to a corresponding designated third party's application on user device 44a and saved therein in the computer-readable memory 33 of user device 44a, block 214. It is intended for decryption key to be time-bound such that the decryption key can only be used during the time periods specified by the user, as heretofore described.

Referring back to Fig. 4A, in operation, with client devices 16 integrated into electronic monitoring system 10, data packets corresponding to notifications, sounds, images, captured frames, and/or video clips captured may be generated by a corresponding client device 16 continuously, in response to instructions from user device 44, or in response to detection of a triggering event. More specifically, each client device 16 is configured, though suitable mounting of the client device 16 and/or through suitable manipulation of its controls, to monitor an area of interest, such as a part of a building or a section of a property, block 116 (Figs. 4A and 5A). For example, the security camera may continuously monitor the area of interest, monitor the area of interest in response to instructions from user device 44, or capture an images and sounds upon receipt of a command from monitoring device 18, block 118 (Figs. 4A and 5a). Thumbnails or video frames of the image and/or sounds may also be captured automatically, in response to a command or instructions from user device 44, or upon detection of a triggering event detected by a detector, which may be incorporated into client device 16 and/or monitoring device 18, or be a standalone detector in communication with client device 16, monitoring device 18 and/or a respective hub 24 or 26. The triggering event may be motion of a triggering object, and the detector may be a motion detector. Instead of or in addition to detecting motion, the detector could include an IR sensor detecting heat, such as the body heat of an animal or person. The triggering event also could be sound, in which case the detector may include a microphone. In this case, the triggering event may be a sound exceeding a designated decibel level or some other identifiable threshold. It is also possible to limit triggering events to detection of a certain class of object, such as an automobile, a person, a package, or an animal. Detection of other types of objects would not trigger image capture and recording. It can be understood that evaluation of the event to determine if the event detected rises to the level of a triggering event may be conducted at client device 16 and/or monitoring device 18. Alternatively, a data packet comprising the data associated with the event may be transmitted to a respective hub 24 or 26 or server 36 of cloud-based control service system 36, in a manner hereinafter described, for evaluation, block 120 (Figs. 4A and 5A).

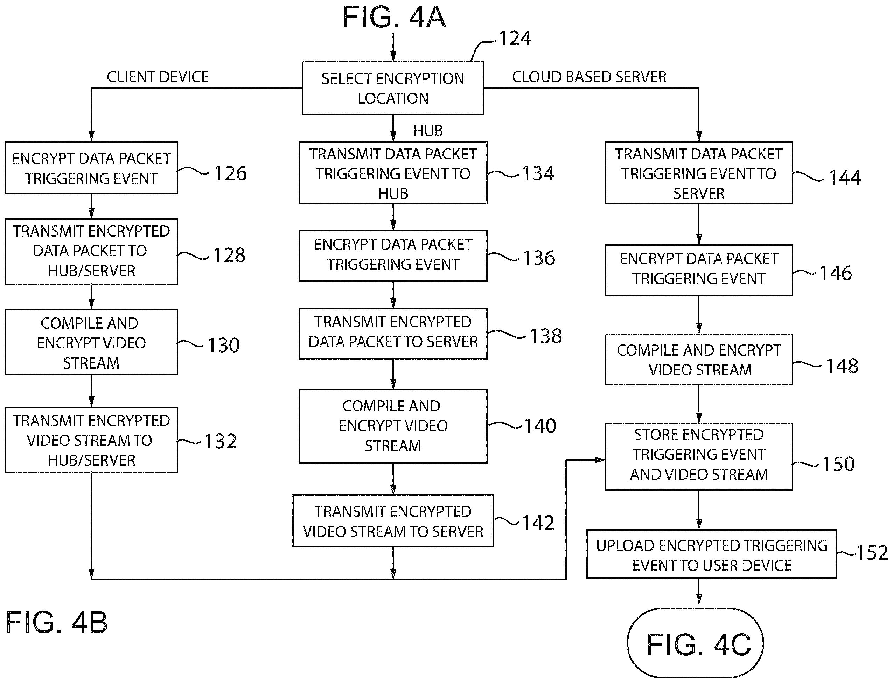

Upon a determination of a triggering event by client device 16, electronic monitoring system 10 generates a push notification ("PN") or other alert or notification and send it to one or more user devices 44 to advise the user of the triggering event, block 122. Alternatively, the PN may be transmitted to server 36 of the cloud-based control service system 34 which, in turn, sends an alert to one or more user devices 44 to advise the user of the triggering event, block 122. Further, the location at which the data packets corresponding to the triggering event are to be encrypted is determined, block 124, FIG. 4B. This may be an automatic determination or pre-selected by a user. By way of example, the data packet comprising the data associated with the event triggering the PN may be encrypted by client device 16 using the public key and transmitted to user device 44.

If the triggering event constitutes an image and sounds captured by the security camera upon receipt of a command from monitoring device 18, processor 23 of monitoring device 18 may encrypt the thumbnails or key video frames of the images using the public key, block 126. Thereafter, the encrypted video frames and associated metadata are transmitted by monitoring device 18, as heretofore described, to a respective hub 24 and/or 26 for further processing and/or further transmission to server 36 of the cloud-based control service system 34 for further processing and/or storage, block 128 and block 150.

In addition, whether the security camera operation continuously monitors the area of interest, monitoring the area of interest in response to a command or instruction from user device 44 is triggered by a command from monitoring device 18 or by detection of a triggering event by a detector, block 128, monitoring device 18 will compile the video frames to create a video stream or event video, which may include corresponding audio, block 130. The video stream is also encrypted by processor 23 of monitoring device 18 using the public key, and the encrypted, enhanced video stream then is transmitted by monitoring device 18, as heretofore described, to a respective hub 24 and/or 26 for further processing and/or further transmission to server 36 of the cloud-based control service system 34 for further processing and/or storage, block 132 and block 150.

Alternatively, monitoring device 18 may transmit the video frames captured by the security camera and the associated metadata directly to a respective hub 24 and/or 26, at which point the thumbnails or key video frames of the image and/or sounds may be automatically analyzed by a corresponding processor 24a and 26a, respectively, to detect a triggering event, as heretofore described. Upon detection of a triggering event, electronic monitoring system 10 generates a PN or other alert or notification and sends it to user device 44 indicating the triggering event, block 134. In addition, thumbnails or key video frames are encrypted by the corresponding processor 24a and 26a, respectively, using the public key, block 136. The encrypted video frames and associated metadata are transmitted by the respective hub 24 and/or 26 to server 36 of the cloud-based control service system 34 for further processing and/or storage, block 138 and block 150.

In addition, the video frames are compiled by the corresponding processor 24a and 26a, respectively, to create a video stream or event video, which may include corresponding audio, block 140. The video stream is encrypted by the corresponding processor 24a and 26a, respectively, using the public key and the encrypted, enhanced video stream is transmitted by the respective hub 24 and/or 26 to server 36 of the cloud-based control service system 34 for further processing and/or storage, block 142 and block 150.

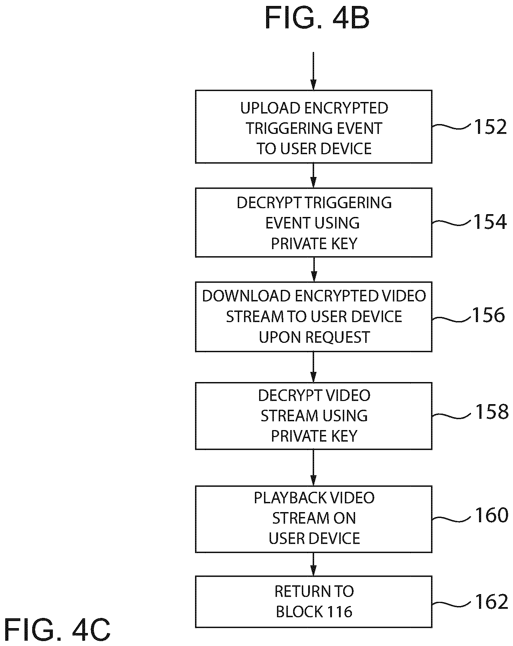

In a still further alternative, monitoring device 18 may transmit the video frames captured by the security camera and associated metadata directly to a respective hub 24 and/or 26 which, in turn, may transmit the video frames and associated metadata to server 36 of the cloud-based control service system 34, block 144, at which point thumbnails or key video frames of the image and/or sounds are automatically analyzed by server 36 to detect a triggering event, as heretofore described. Upon detection of a triggering event, cloud-based control service system 34 generates a PN or other alert or notification and sends it to user device 44 for indicating the triggering event. In addition, the thumbnails or key video frames are encrypted by server 36 using the public key, block 146, and stored along with their associated metadata on the computer-readable memory associated with cloud-based control service system 34 for further processing and/or further transmission, block 150. Further, the video frames are compiled by server 36 to create a video stream or event video, which may include corresponding audio, block 148. The video stream is encrypted using the public key and stored on the computer-readable memory associated with cloud-based control service system 34 for further processing and/or further transmission, block 152, FIG. 4C.

Access of the application on the user device 44 in response to receipt of a PN or other alert or notification indicating the triggering event causes the server 36 of the cloud-based control service system 34 to upload the encrypted video frames to user device 44, block 152. Processor 31 of user device 44 decrypts the encrypted video frames received from server 36 of the cloud-based control service system 34 utilizing the private key stored in the computer readable memory 33 of user device 44, thereby allowing the thumbnails or decrypted video frames, along with the associated metadata, to be displayed on the display system 41 of the user device 44, block 154.

Upon its selection by a user, e.g. by actuating user input 46 or tapping on a displayed, decrypted video frame, the encrypted video stream is downloaded from server 36 of the cloud-based control service system 34, block 156, and is decrypted by processor 31 utilizing the private key, as heretofore described, block 158. The decrypted video stream is then played back on the display system 41 of the user device 44, block 160. It can be appreciated that at any point during or after detection of a possible triggering event, electronic monitoring system 10 may return to step of monitoring the desired area of interest to detect a subsequent possible triggering event, block 162.

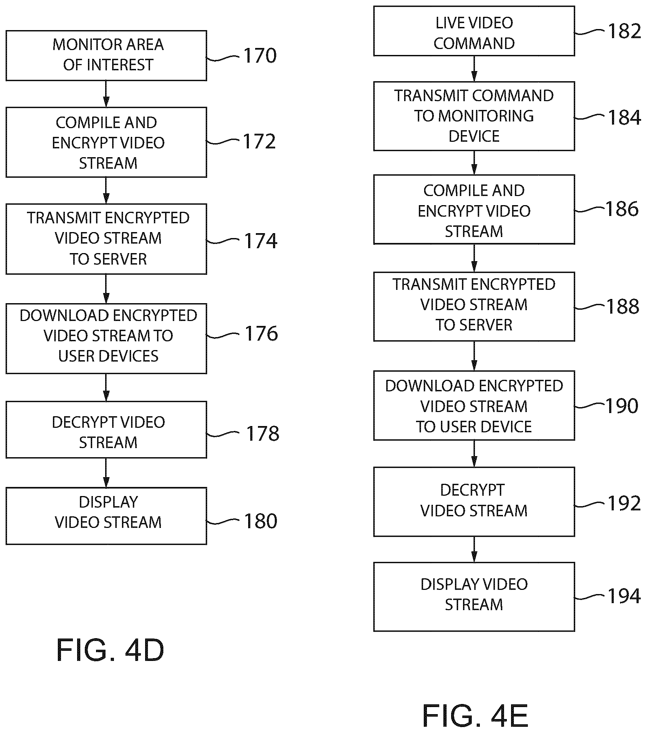

Referring to Fig. 4D, if the security camera operation is continuously monitoring the area of interest, and thus not responsive to a triggering event captured by a detector, block 170, monitoring device 18 may compile the video frames captured by the security camera to create a video stream or event video, which may include corresponding audio. The video stream is encrypted by processor 23 of monitoring device 18 using the public key, block 172, and the encrypted, enhanced video stream then is transmitted by monitoring device 18, as heretofore described, to a respective hub 24 and/or 26 for further processing and/or further transmission to server 36 of the cloud-based control service system 34 for further processing and/or storage, block 174.

In the event, a user chooses to view all or a portion of the video stream of the area of interest, the user may utilize user input 46 of user device 44 to selectively download all or a portion of the encrypted video stream from server 36 of the cloud-based control service system 34, block 176. For example, a user may select a portion of the video stream corresponding to a specific time and date. Upon receipt of the encrypted video stream from server 36 of the cloud-based control service system 34 by user device 44, the encrypted video stream is decrypted by processor 31 utilizing the private key, as heretofore described, block 178. The decrypted video stream is then played back on the display system 41 of the user device 44, block 180.

Referring to Fig. 4E, in the event a user wishes to view a live video stream of the area of interest, a user may utilize user input 46 of user device 44 to selectively send a corresponding command to server 36 of the cloud-based control service system 34, block 182. In response, cloud-based control service system 34 transmits the command to base station hub 24 and the various client devices 16, such as monitoring devices 18 and sensors 20, block 184. Monitoring device 18 will then compile the video frames from the live image taken by the security camera of the area of interest to create a video stream or event video, which may include corresponding audio. The video stream is encrypted by processor 23 of monitoring device 18 using the public key, block 186, and the encrypted, enhanced video stream then is transmitted by monitoring device 18, as heretofore described, to a respective hub 24 and/or 26 for further processing and/or further transmission to server 36 of the cloud-based control service system 34 for further processing and/or storage, block 188. In addition, server 36 of the cloud-based control service system 34 immediately downloads the encrypted, enhanced video stream to user device 44, block 190. Upon receipt of the encrypted video stream from server 36 of the cloud-based control service system 34 by user device 44, the encrypted video stream is decrypted by processor 31 utilizing the private key, as heretofore described, block 192. The decrypted video stream is then played on the display system 41 of the user device 44, block 194.

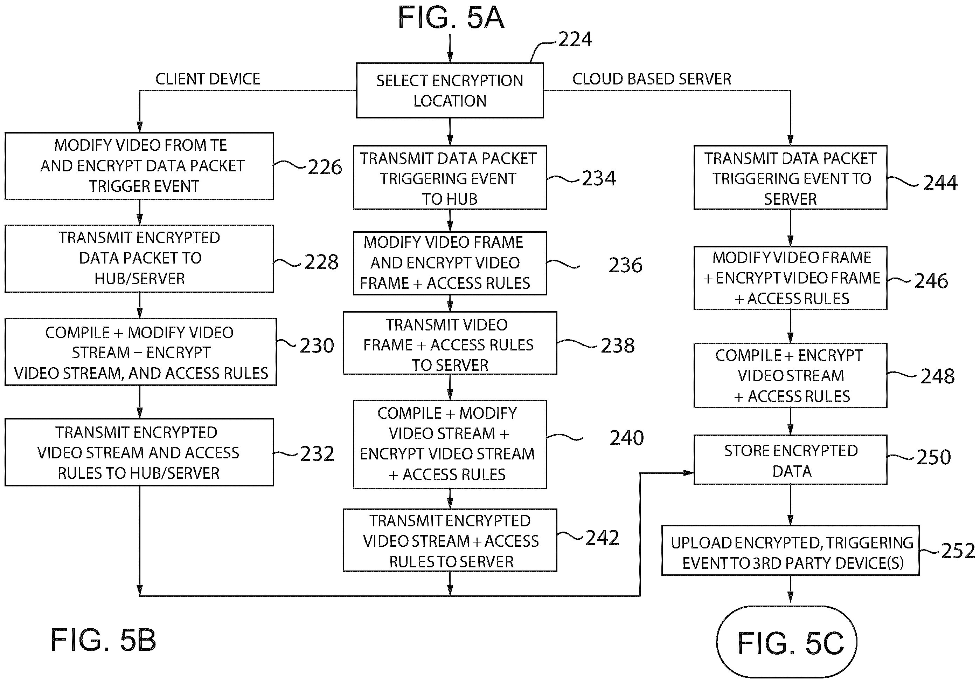

In the event that the triggering event is generated by a specified client device 16 during the selected time period in which a designated third party may have access to a corresponding data packet, block 220, Fig. 5A, electronic monitoring system 10 generates a PN that is transmitted to server 36 of the cloud-based control service system 34 which, in turn, sends an alert to user device 44a of the corresponding designated third party user to advise the designated third party user of the triggering event, block 222. Further, the location at which the data packets corresponding to the triggering event and the access rules previously selected by the user for a designated third party are to be encrypted is determined, block 224, FIG. 5B. This may be an automatic determination or pre-selected by a user.

If the triggering event constitutes an image and sounds captured by the security camera upon receipt of a command from monitoring device 18, processor 23 of monitoring device 18 modifies the thumbnails or key video frames of the images in accordance with the access rules previously selected by the user for the designated third party and encrypts the modified thumbnails or key video frames of the images and the access rules previously selected by the user using the third party public key for the designated third party, block 226. Thereafter, the encrypted data packet containing the video frames, associated metadata, and access rules are transmitted by monitoring device 18, as heretofore described, to a respective hub 24 and/or 26 for further processing and/or further transmission to server 36 of the cloud-based control service system 34 for further processing and/or storage, block 228 and block 250.

In addition, whether the security camera operation is continuously monitoring the area of interest, monitoring the area of interest in response to a command or instruction from user device 44, is triggered by a command from monitoring device 18 or by detection of a triggering event by a detector, monitoring device 18 will compile the video frames to create a video stream or event video, which may include corresponding audio, block 230. In addition, monitoring device 18 modifies the compiled video frames in accordance with the access rules previously selected by the user for the designated third party and encrypts the modified compiled video frames, the associated metadata and the access rules previously selected by the user using the third party public key for the designated third party. The encrypted, enhanced video stream, the associated metadata and the access rules are then transmitted by monitoring device 18, as heretofore described, to a respective hub 24 and/or 26 for further processing and/or further transmission to server 36 of the cloud-based control service system 34 for further processing and/or storage, block 232 and block 250.

Alternatively, as described above, monitoring device 18 may transmit the video frames captured by the security camera and the associated metadata directly to a respective hub 24 and/or 26, block 234, at which point the thumbnails or key video frames of the image and/or sounds may be automatically analyzed by a corresponding processor 24a and 26a, respectively, to detect a triggering event, as heretofore described. Upon detection of a triggering event, electronic monitoring system 10 generates a PN that is transmitted to server 36 of the cloud-based control service system 34 which, in turn, sends an alert to user device 44a of the corresponding designated third party user to advise the designated third party user of the triggering event. In addition, corresponding processor 24a and 26a modifies thumbnails or key video frames in accordance with the access rules previously selected by the user for the designated third party and encrypts the modified thumbnails or key video frames of the images, the associated metadata and the access rules previously selected by the user using the third party public key for the designated third party, block 236. The encrypted video frames, associated metadata and access rules are transmitted by the respective hub 24 and/or 26 to server 36 of the cloud-based control service system 34 for further processing and/or storage, block 238 and block 250.

In addition, the video frames are compiled by the corresponding processor 24a and 26a, respectively, to create a video stream or event video, which may include corresponding audio, and modifies the video stream in accordance with the access rules previously selected by the user for the designated third party, block 240. The video stream, the associated metadata and access rules are encrypted by the corresponding processor 24a and 26a, respectively, using the third party public key for the designated third party and the encrypted, enhanced video stream, associated metadata and access rules are transmitted by the respective hub 24 and/or 26 to server 36 of the cloud-based control service system 34 for further processing and/or storage, block 242 and block 250.

In a still further alternative, monitoring device 18 may transmit the video frames captured by the security camera and associated metadata directly to a respective hub 24 and/or 26 which, in turn, may transmit the video frames and associated metadata to server 36 of the cloud-based control service system 34, block 244, at which point thumbnails or key video frames of the image and/or sounds are automatically analyzed by server 36 to detect a triggering event, as heretofore described. In the event that the triggering event occurs during the selected time period in which a designated third party may have access to a corresponding data packet, cloud-based control service system 34 generates a PN or other alert or notification and sends it to user device 44 for indicating the triggering event, as well as, to user device 44a of the corresponding designated third party user to advise the designated third party user of the triggering event In addition, the thumbnails or key video frames are modified in accordance with the access rules previously selected by the user for the designated third party and the modified thumbnails or key video frames of the images, the associated metadata and the access rules previously selected by the user are encrypted using the third party public key for the designated third party, block 246, and stored on the computer-readable memory associated with cloud-based control service system 34 for further processing and/or further transmission, block 250. Further, the modified video frames are compiled by server 36 to create a video stream or event video, which may include corresponding audio, block 248. The modified video stream the associated metadata and the access rules previously selected by the user are encrypted using the third party public key for the designated third party and stored on the computer-readable memory associated with cloud-based control service system 34 for further processing and/or further transmission, block 250.

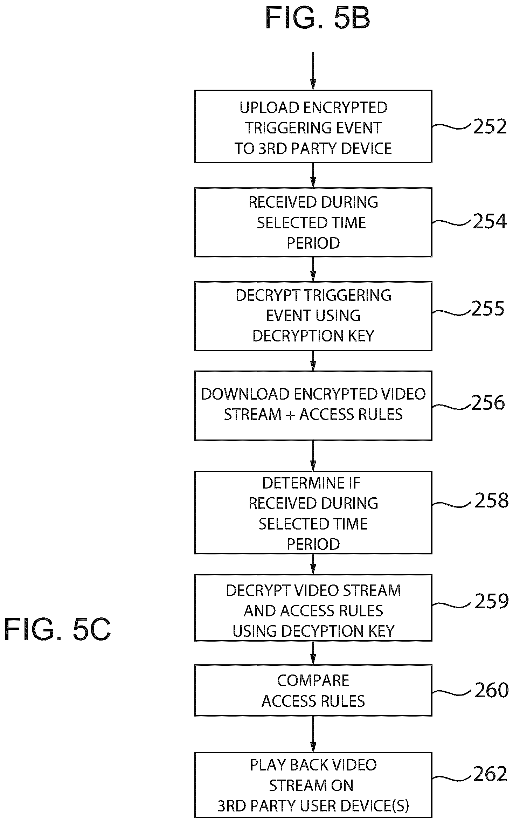

During the selected time period in which a designated third party may have access to a corresponding data packet, a PN or other alert or notification indicating the triggering event is transmitted by server 36 of the cloud-based control service system 34 to user device 44a which was designated third party to have access to a corresponding data packet during the selected time period. Access to the application on the user device 44a in response to receipt of a PN or other alert or notification indicating the triggering event causes the server 36 of the cloud-based control service system 34 to upload the encrypted video frames, the associated metadata and the access rules previously selected by the user to the designated third party user device 44, block 252, FIG. 5C. In response, processor 31 of user device 44a determines if encrypted the video frames, the associated metadata and the access rules previously selected by the user was received during the selected time period, block 254. If so, processor 31 decrypts the encrypted video frames, the associated metadata and the access rules previously selected by the user received from server 36 of the cloud-based control service system 34 utilizing the decryption key previously uploaded to third party user device 44a and stored in the computer readable memory 33 of user device 44a, block 255. If the decrypted access rules correspond to the access rules previously provided to third party user device 44a, as heretofore described, the thumbnails or decrypted video frames, along with the associated metadata, to be displayed on the display system 41 of the third party user device 44a.

Upon its selection by a user during the selected time period in which a designated third party may have access thereto, e.g. by actuating user input 46 or tapping on a displayed, decrypted video frame, the encrypted video stream, associated metadata and the access rules previously selected by the user are downloaded from server 36 of the cloud-based control service system 34, block 256. In response, processor 31 of user device 44a determines if the encrypted video stream, associated metadata and access rules previously selected by the user was received during the selected time period, block 258. If so, processor 31 decrypts the encrypted video stream, the associated metadata and the access rules previously selected by the user received from server 36 of the cloud-based control service system 34 utilizing the decryption key previously uploaded to user device 44a and stored in the computer readable memory 33 of user device 44a, block 259. If the decrypted access rules correspond to the access rules previously provided to user device 44a, as heretofore described, block 260, the decrypted video stream, along with the associated metadata, are displayed on the display system 41 of the user device 44, thereby allowing the decrypted video stream to be played back on the display system 41 of the user device 44, block 262.

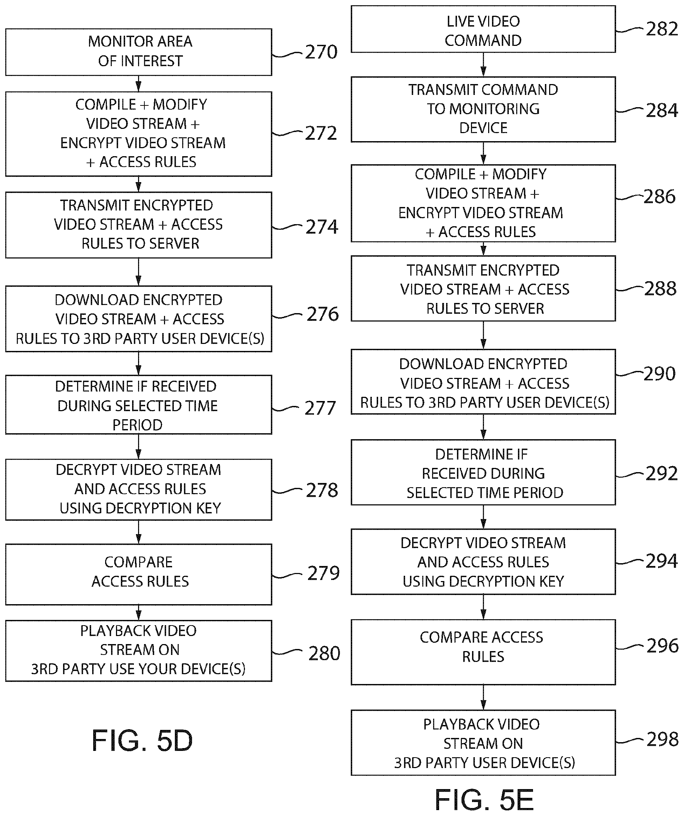

Referring to Fig. 5D, if the security camera operation is continuously monitoring the area of interest, and thus not responsive to a triggering event captured by a detector, block 270, monitoring device 18 may compile the video frames captured by the security camera during the selected time period in which a designated third party may have access thereto to create a video stream or event video, which may include corresponding audio. The video stream is modified in accordance with the access rules and the modified video stream, associated metadata and the access rules previously selected by the user and thereafter encrypted by processor 23 of monitoring device 18 using the third party public key for the designated third party, block 272. The encrypted video stream, associated metadata and the access rules previously selected by the user are then transmitted by monitoring device 18, as heretofore described, to a respective hub 24 and/or 26 for further processing and/or further transmission to server 36 of the cloud-based control service system 34 for further processing and/or storage, block 274.

In the event that the designated third party chooses to view all or a portion of the video stream of the area of interest during the selected time period, the designated third party may utilize user input 46 of user device 44a to selectively download all or a portion of the encrypted video stream from server 36 of the cloud-based control service system 34, block 276. For example, a user may select a portion of the video stream corresponding to a specific time and/or date with the selected time period. Upon receipt of the encrypted video stream from server 36 of the cloud-based control service system 34 by user device 44a, processor 31 of user device 44a determines if the encrypted video stream, associated metadata and access rules previously selected by the user was taken during the selected time period, block 277. If so, processor 31 decrypts the encrypted video stream, the associated metadata and the access rules previously selected by the user received from server 36 of the cloud-based control service system 34 utilizing the decryption key previously uploaded to user device 44a and stored in the computer readable memory 33 of user device 44a, block 278. If the decrypted access rules correspond to the access rules previously provided to user device 44a, as heretofore described, block 279, the decrypted video stream, along with the associated metadata, are displayed on the display system 41 of the user device 44a, thereby allowing the decrypted video stream to be played back on the display system 41 of the user device 44a, block 280

Referring to Fig. 5e, in the event a designated third party user wishes to view a live video stream of the area of interest during the selected time period, the designated third party user may utilize user input 46 of user device 44a to selectively send a corresponding command to server 36 of the cloud-based control service system 34, block 282. In response, cloud-based control service system 34 transmits the command to base station hub 24 and the various client devices 16, such as monitoring devices 18 and sensors 20, block 284. Monitoring device 18 will then compile the video frames from the live image taken by the security camera of the area of interest to create a video stream or event video, which may include corresponding audio, block 286. The video stream is modified in accordance with the access rules by processor 23 and the modified video stream, associated metadata and the access rules previously selected by the user and thereafter encrypted by processor 23 of monitoring device 18 using the third party public key for the designated third party. The encrypted video stream, associated metadata and the access rules previously selected by the user are then transmitted by monitoring device 18, as heretofore described, to a respective hub 24 and/or 26 for further processing and/or further transmission to server 36 of the cloud-based control service system 34, block 288. The encrypted video stream, associated metadata and the access rules previously selected by the user are uploaded from server 36 of the cloud-based control service system 34, block 290, to the user device 44a for the designated third party. Upon receipt of the encrypted video stream from server 36 of the cloud-based control service system 34 by user device 44a of the designated third party, processor 31 of user device 44a determines if the encrypted video stream, associated metadata and access rules previously selected by the user is received during the selected time period, block 292. If so, processor 31 decrypts the encrypted video stream, the associated metadata and the access rules previously selected by the user received from server 36 of the cloud-based control service system 34 utilizing the decryption key previously uploaded to user device 44a and stored in the computer readable memory 33 of user device 44a, block 294. If the decrypted access rules correspond to the access rules previously provided to user device 44a, as heretofore described, block 296, the decrypted video stream, along with the associated metadata, are displayed on the display system 41 of the user device 44, thereby allowing the decrypted video stream to be played on the display system 41 of the user device 44, block 298.

Although the best mode contemplated by the inventors of carrying out the present invention is disclosed above, practice of the above invention is not limited thereto. It will be manifest that various additions, modifications, and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

## Claims

1. An electronic monitoring system, comprising:
a monitor for monitoring an activity within an activity zone, the monitor being configured to generate a data packet corresponding to the activity;
an encryption processor in communication with the monitor and being configured to encrypt the data packet in accordance with a user selected rule using a first public key;
wherein the encryption process is configured to communicate with a cloud-based control system that is configured to receive and store the data packet encrypted with the first public key; and
wherein the cloud-based control system is configured to communicate with a first user device that is associated with the monitor, the first user device including an input allowing a user to transmit a request to the cloud-based control system to provide a time-bound decryption key capable of decrypting the data packet encrypted with the first public key during a selected time period to a second user device.

2. The electronic monitoring system of claim 1, wherein:
the encryption processor is configured to encrypt the data packet using a second public key;
the first user device is adapted to receive the data packet encrypted with the second public key, the user device including:
a private key; and
a decryption processor configured to decrypt the data packet encrypted with the second public key using the private key.

3. The electronic monitoring system of claim 1 or 2, the cloud-based control system is configured to communicate with the second user device, the second using device being adapted to receive the data packet encrypted with the first public key and the time-bound decryption key therefrom, the second user device including a decryption processor configured to decrypt the data packet encrypted with the first public key using the time-bound decryption key during the selected time period.

4. The electronic monitoring system of any of claims 1-3, wherein the monitor includes a detector that is configured to detect the activity in the activity zone, the detector being configured to generate the data packet in response to detection of the activity in the activity zone and configured to generate an alert signal in response to detection of the activity within the activity zone.

5. The electronic monitoring system of claim 4, wherein the cloud-based control system is configured to receive the alert signal, and wherein the cloud-based control system is configured to transmit an alert to the second user device when the alert signal is received during the selected time period.

6. The electronic monitoring system of claim 4 or 5, wherein the detector includes an imaging device having a field of view in the activity zone and being configured to capture an image of the field of view in response to the detection of the activity within the activity zone, the image being comprised of a plurality of frames defining the data packet.

7. The electronic monitoring system of claim 6, wherein the data packet is a first data packet, and wherein each frame of the plurality of frames of the image defines a corresponding data packet so as to define a plurality of data packets.

8. The electronic monitoring system of claim 6, wherein the plurality of the frames defines an event video, and wherein the encryption processor is configured to encrypt the event video using the first public key.

9. A method of monitoring an activity zone, comprising the steps of:
transmitting a request to a control system to provide a time-bound decryption key capable of decrypting a data packet encrypted with a first public key during a selected time period to a selected user device;
monitoring for an activity within an activity zone and, upon detecting the activity, generating the data packet corresponding to the activity;
transmitting the data packet to a control system;
storing the data packet in computer-readable memory associated with the control system, the data packet being encrypted utilizing the first public key prior to storage in computer-readable memory;
transmitting the data packet encrypted with the first public key and the time-bound decryption key to the selected user device, the selected user device including a decryption processor configured to decrypt the data packet encrypted with the first public key using the time-bound decryption key during the selected time period.

10. The method of claim 9, further comprising decrypting the data packet encrypted with the first public key on the selected user device using the time-bound decryption key during the selected time period.

11. The method of claim 9 or 10, wherein the activity is monitored by a monitoring device, and wherein the request is transmitted by a system user device previously associated with the monitoring device.

12. The method of claim 11, further comprising encrypting the data packet using a second public key, wherein the system user device is adapted to receive the data packet encrypted using a second public key and includes:
a private key; and
a decryption processor that is configured to decrypt the data packet encrypted with the second public key using the private key.

13. The method of any of claims 9-13, further comprising:
generating an alert signal in response to detection of the activity within the activity zone; and
transmitting the alert signal to the control system.

14. The method of claim 132, further comprising transmitting an alert from the control system to the selected user device when the alert signal is received by the control system during the selected time period.
